# EUROPEAN PATENT APPLICATION

(11) **EP 3 115 944 A1**
(43) Date of publication of application: **11.01.2017**
(21) Application number: 16177838.6
(22) Date of filing: 04.07.2016
(51) Int. Cl.: G06Q 10/06, G06Q 10/00

(54) **WORK SUPPORTING TERMINAL DEVICE, WORK SUPPORTING SYSTEM, WORK SUPPORTING METHOD, PROGRAM, AND RECORDING MEDIUM**

(30) Priority: 07.07.2015 JP 2015136121
(71) Applicant: Yokogawa Electric Corporation, Tokyo (JP)
(72) Inventor: Tokuoka, Moe, Tokyo (JP); Furihata, Ryouhei, Tokyo (JP)
(74) Representative: Henkel, Breuer & Partner

(57) **Abstract**

A work supporting terminal device supports an inspection work performed on a facility of a plant. The work supporting terminal device includes: a category information generator that generates category information items obtained by classifying extra event information items recorded for extra events, which are not included in events to be inspected in the inspection work, among events occurring in the plant, according to the kind of extra event; and a display that displays the category information items.

## Description

### BACKGROUND OF THE INVENTION

### Field of the Invention

The present invention relates to a work supporting terminal device, a work supporting system, a work supporting method, a program, and a recording medium.

Priority is claimed on Japanese Patent Application No. 2015-136121, filed on July 7, 2015, the content of which is incorporated herein by reference.

### Description of Related Art

All patents, patent applications, patent publications, scientific articles, and the like, which will hereinafter be cited or identified in the present application, will hereby be incorporated by reference in their entirety in order to describe more fully the state of the art to which the present invention pertains.

In a plant equipped with various facilities, in order to operate the facilities normally and in order to safely maintain the plant, inspection work is routinely performed in a specific place at a specific time. In general, the inspection work is performed by inspecting check items listed on a checklist one by one according to a work manual.

In Japanese Unexamined Patent Application, First Publication No. H11-039030, a facility management device for use in inspection work of a steam plant is described. The facility management device displays a sketch of the facility and indicators corresponding to the devices constituting the facility on the sketch. If a worker selects an indicator from these indicators, detailed data of the device corresponding to the selected indicator is displayed. Accordingly, the worker can visually ascertain the positional relationship or connection relationship between the devices.

Such inspection work using a checklist is useful for performing inspection in which work efficiency can be achieved without omission. However, the inspection work using the checklist has the following problems. For example, in a case where problems which are not present on the checklist occur in a period during which the worker performs the inspection work or when the worker moves to another inspection place, if the worker is not able to appropriately respond to the problem and responds to the problem based on their own determination, there is a possibility that the problem will worsen. Also, if the worker leaves the problem as it is, there is a possibility that the problem will worsen. Time is taken for the worker to call a person capable of responding to the problem, and thus, there is a possibility that inspection work to be originally performed in a predetermined place at a predetermined time will not be performed.

### SUMMARY OF THE INVENTION

Therefore, an object of the present invention is to provide a work supporting terminal device, a work supporting system, a work supporting method, a program, and a recording medium which are capable of solving the aforementioned problems.

A work supporting terminal device of the present invention which solves the above-described problems is a work supporting terminal device that supports inspection work performed on a facility of a plant. The device includes: a category information generator that generates category information items obtained by classifying extra event information items recorded for extra events, which are not included in events to be inspected in the inspection work, among events occurring in the plant, according to the kind of extra event; and a display that displays the category information items.

The work supporting terminal device according to the present invention may further include a checklist generator that generates a checklist for use in the inspection work of the plant. The category information generator may obtain the extra event information items associated with an inspection item selected from inspection items included in the checklist generated by the checklist generator, and may classify the extra event information items according to the kind of obtained extra event information item to generate the category information items.

In the work supporting terminal device according to the present invention, the category information generator may obtain positional information of the work supporting terminal device, and may rearrange the category information items obtained by classifying the extra event information items, which include the positional information and are associated with a position within a predetermined range, depending on the number of extra event information items included in the category information item.

The work supporting terminal device according to the present invention may further include a summary information generator that generates summary information items of the extra event information items. The summary information generator may generate the summary information items of the extra event information items included in the category information item selected from the category information items displayed by the category information generator.

The work supporting terminal device according to the present invention may further include a map information generator that obtains positional information of the work supporting terminal device to generate map information item near a position indicated by the positional information.

In the work supporting terminal device according to the present invention, the category information generator may classify the extra event information items, which are associated with a position within a range designated on the map information item generated by the map information generator, according to the kind of extra event information item to generate the category information items.

In the work supporting terminal device according to the present invention, the category information generator may give a high priority to the generated category information items in descending order of the number of extra event information items included in the category information items, and the display may arrange the category information items in descending order of priority, and may display the arranged category information items.

The work supporting terminal device according to the present invention may further include a summary information generator that generates summary information items of the extra event information items. The summary information generator may generate the summary information items of the extra event information items associated with a position selected on the map information item generated by the map information generator.

In the work supporting terminal device according to the present invention, the display may arrange or switch between the category information items generated by the category information generator and the summary information items generated by the summary information generator, and may display the arranged or switched information items.

In the work supporting terminal device according to the present invention, the display may arrange or switch between the category information items generated by the category information generator, the summary information items generated by the summary information generator, and the map information item generated by the map information generator, and may display the arranged or switched information items.

A work supporting system of the present invention includes: a server terminal device that obtains extra event information items from a storage which stores extra event information items recorded for extra events which are not included in events to be inspected in an inspection work performed on a facility of a plant; and the above-described work supporting terminal device.

A work supporting method of the present invention is a work supporting method of a work supporting terminal device that supports an inspection work performed on a facility of a plant. The method includes classifying extra event information items recorded for extra events, which are not included in events to be inspected in the inspection work, among events occurring in the plant according to the kind of extra event to generate category information items, and displaying the category information items.

A program of the present invention is a program causing a computer of a work supporting terminal device that supports an inspection work performed on a facility of a plant to perform: generating category information items obtained by classifying extra event information items recorded for extra events, which are not included in events to be inspected in the inspection work, among events occurring in the plant according to the kind of extra event; and displaying the category information items.

A recording medium of the present invention is a non-transitory computer readable recording medium that records a computer program, which when executed by a processor of a computer of a work supporting terminal device which supports an inspection work performed on a facility of a plant, causes the computer to perform: generating category information items obtained by classifying extra event information items recorded for extra events, which are not included in events to be inspected in the inspection work, among events occurring in the plant according to the kind of extra event; and displaying the category information items.

According to the present invention, in a case where events which are not present on a checklist occur while performing routine inspection work in a plant, it is possible to ascertain an appropriate method of responding to such events.

### BRIEF DESCRIPTION OF THE DRAWINGS

The above features and advantages of the present invention will be more apparent from the following description of certain preferred embodiments taken in conjunction with the accompanying drawings.
FIG. 1 is a functional block diagram of a work supporting terminal device according to a first embodiment of the present invention.
FIG. 2 is a first diagram showing an example of a checklist for routine inspection displayed by the work supporting terminal device according to the first embodiment of the present invention.
FIG. 3 is an example of a trouble supporting information display image displayed by the work supporting terminal device according to the first embodiment of the present invention.
FIG. 4 is an example of a trouble detailed information display image displayed by the work supporting terminal device according to the first embodiment of the present invention.
FIG 5 is an example of a trouble information management table stored by the work supporting terminal device according to the first embodiment of the present invention.
FIG. 6 is an example of a trouble case registration screen displayed by the work supporting terminal device according to the first embodiment of the present invention.
FIG. 7 is a second diagram showing an example of the checklist for routine inspection displayed by the work supporting terminal device according to the first embodiment of the present invention.
FIG. 8 is a diagram showing an example of map information displayed by the work supporting terminal device according to the first embodiment of the present invention.
FIGS. 9A and 9B are third diagrams showing an example of the checklist for routine inspection displayed by the work supporting terminal device according to the first embodiment of the present invention.
FIG. 10 is a second diagram showing an example of the trouble supporting information display image displayed by the work supporting terminal device according to the first embodiment of the present invention.
FIG. 11 is a third diagram showing an example of the trouble supporting information display image displayed by the work supporting terminal device according to the first embodiment of the present invention.
FIG. 12 is a fourth diagram showing an example of the trouble supporting information display image displayed by the work supporting terminal device according to the first embodiment of the present invention.
FIG. 13 is a second diagram showing an example of the trouble detailed information display image displayed by the work supporting terminal device according to the first embodiment of the present invention.
FIG. 14 is a flowchart of a display operation of the work supporting terminal device according to the first embodiment of the present invention.
FIG 15 is a schematic diagram of a work supporting system including a work supporting terminal device according to a second embodiment of the present invention.

### DETAILED DESCRIPTION OF THE INVENTION

### (First Embodiment)

Hereinafter, a work supporting terminal device according to a first embodiment of the present invention will be described with reference to the drawings.

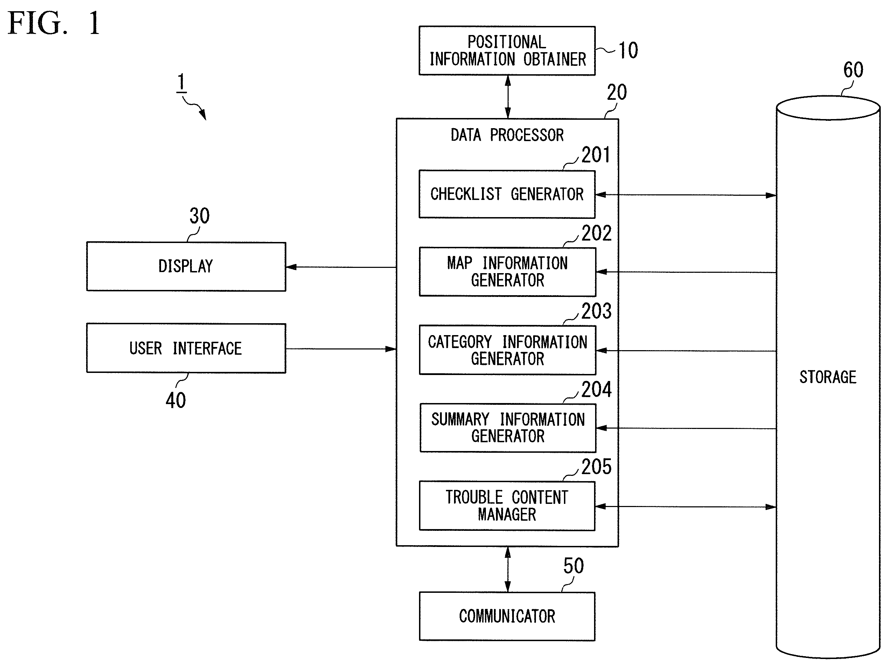

FIG. 1 is a functional block diagram of the work supporting terminal device according to the first embodiment of the present invention. A work supporting terminal device 1 includes a positional information obtainer 10, a data processor 20, a display 30, a user interface 40, a communicator 50, and a storage 60.

The work supporting terminal device 1 is a portable terminal device carried by a worker who performs an inspection work or responds troubles in a facility installed in a plant. As the plant, in addition to an industrial plant such as chemicals, there is a plant that manages and controls a well site such as a gas field or an oil field or a region near the well site, a plant that manages and controls power generation such as water power, thermal power or atomic power, a plant that manages and controls environmental power generation such as sunlight or wind power, and a plant that manages and controls water supply and sewerage or a dam. The facility is, for example, a tank, a valve, a pipe, a field device, or the like.

The work supporting terminal device 1 stores electronic data of a checklist or a manual for use in an inspection work of the plant which is routinely performed by the worker. The worker displays the electronic data such as the manual required for the inspection work on the display 30 included in the work supporting terminal device 1 by performing a predetermined operation on the work supporting terminal device 1. For example, the worker performs an inspection work of a facility, which is installed in a predetermined place, in the predetermined place at a predetermined time while referring to the displayed manual or checklist. The worker inputs the result of the inspection work to the work supporting terminal device 1 by using input means (user interface 40) included in the work supporting terminal device 1. The worker meets events which can be incomprehensible by just looking at the manual or checklist in a routine inspection work in some cases. The work supporting terminal device 1 stores history information of the occurrence of events which are not registered in the checklist or a method of responding to the events, and provides these information items to the worker. Particularly, the work supporting terminal device 1 provides means capable of allowing the worker to promptly find target information with a simple operation.

For example, the components of the work supporting terminal device 1 are provided in an electronic device such as a table terminal device or smart phone which has a function of a personal digital assistant (PDA), or a personal computer used by the worker.

In response to a request from the data processor 20, the positional information obtainer 10 receives, for example, a GPS signal from a global positioning system (GPS) satellite, and obtains information (hereinafter, referred to as "positional information") indicating the position of the work supporting terminal device 1. The positional information obtainer 10 outputs the obtained positional information to the data processor 20, and stores the obtained positional information in the storage 60.

The data processor 20 controls the entire work supporting terminal device 1 by controlling the components included in the work supporting terminal device 1. The data processor 20 performs processes for realizing functions in the work supporting terminal device 1, such as an instruction indicating the method of responding to the events which are not registered in the checklist or the checklist. More specifically, the data processor 20 displays checklists of inspection works for the facilities installed in the plant. The data processor 20 records the inspection results of the check items in the storage 60. The data processor 20 associates with a process of presenting information indicating the method of responding to the events which are not registered in the checklist with positional information obtained by the positional information obtainer 10 or positional information of the facility selected by the user. The data processor 20 generates map information items in the plant where the work supporting terminal device 1 is used, based on the positional information obtained by the positional information obtainer 10. The data processor 20 generates images (hereinafter, referred to as "display images") of display screens corresponding to the processed functions of the work supporting terminal device 1, outputs and displays the generated display image on the display 30, or controls the switching (screen transition) between the display images.

The data processor 20 includes a checklist generator 201, a map information generator 202, a category information generator 203, a summary information generator 204, and a trouble content manager 205.

The checklist generator 201 generates a display image of a checklist corresponding to the inspection work selected by the user and outputs the generated display image on the display 30.

Based on the positional information obtained by the positional information obtainer 10 or positional information of an inspection place selected by the user, the map information generator 202 generates a display image (map information) of a map including the facility of the plant present in the surrounding area and outputs the generated display image to the display 30.

The category information generator 203 generates category information items obtained by classifying events, which are not included in inspection items of the plant, among events occurring in the plant, according to the kind of event. The category information generator 203 generates a display image obtained by rearranging the category information items depending on the frequency with which the event corresponding to the category information item occurs, and outputs the generated display image to the display 30. The category information is information which includes the kind of event, and the frequency with which the event corresponding to this kind occurs.

The summary information generator 204 generates a display image including summary information items of the events included in the category information items generated by the category information generator 203 and outputs the generated display image to the display 30. For example, the summary information (hereinafter, referred to as "summary information") is information such as the occurrence date and time or summary of the content of the event for each event or information indicating whether the event is an event determined to have a problem or the event is an event determined not to particularly have a problem.

The trouble content manager 205 generates a display image in which information indicating the method of responding to the events which can be incomprehensible by just looking at the checklist is described and outputs the generated display image to the display 30. More specifically, if the user performs a selection operation on the summary information generated by the summary information generator 204, the trouble content manager 205 generates a display image including the detailed content of the summary information selected by the user, and outputs the generated display image to the display 30.

The trouble content manager 205 generates a display image for registering information of the event which the worker meets and outputs the generated display image to the display 30. More specifically, if the user presses a registration button displayed on the display 30, the trouble content manager newly generates a display image of an interface for registering the information regarding the event and outputs the generated display image to the display 30.

For example, the display 30 is a display device such as a liquid crystal display (LCD), and displays the display image output from the data processor 20 to present information to the worker.

For example, the user interface 40 is a user interface, such as a kind of button or switch, which receives the operation performed by the worker on the work supporting terminal device 1. The user interface 40 outputs information corresponding to the received operation performed by the worker to the data processor 20. The user interface 40 is not limited to the kind of button or switch, and may be formed of, for example, a piezoelectric sensor included in the display 30. That is, the user interface 40 may be formed of a touch panel combined with the display 30. In this case, the user interface 40 detects various touch (tap or click) operations performed by the worker, and receives the detected operation as the operation performed by the worker on the work supporting terminal device 1.

The communicator 50 communicates with various devices used by the work supporting terminal device 1. For example, in a case where a plurality of work supporting terminal devices 1 is used in the plant, the communicator 50 communicates with another work supporting terminal device 1. The communicator 50 communicates with a storage terminal device or a server terminal device installed in the plant or a data center. The communication method between the communicator 50 and the server terminal device or another work supporting terminal device 1 is not particularly limited irrespective of a wired or wireless manner.

The storage 60 is a storage that stores data for use in various processes in the work supporting terminal device 1. For example, the storage 60 stores the positional information obtained by the positional information obtainer 10 or the information regarding the event registered by the trouble content manager 205 through the user interface 40. The storage 60 stores information regarding an event which is obtained by the communicator 50 through communication and is registered in another work supporting terminal device 1.

In such a configuration, the work supporting terminal device 1 supports a routine inspection work such as the presenting of the information regarding the event occurring in the plant and can be incomprehensible from the checklist and the method of responding to the event, and the storing of information regarding a new event.

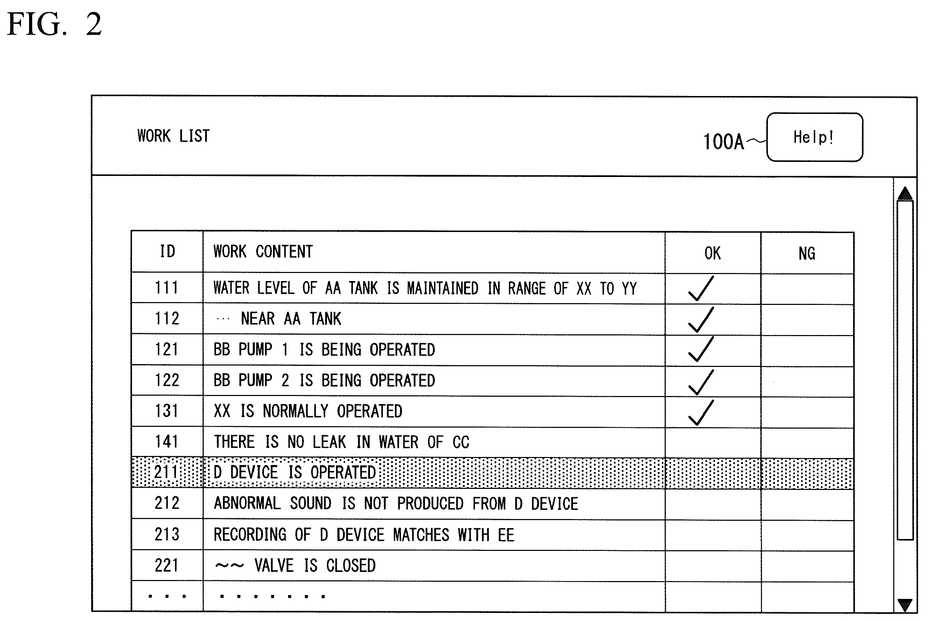

Hereinafter, the operation of the work supporting terminal device 1 of the present embodiment will be described. Initially, the operation and display image in a case where a display device (referred to as a work supporting terminal device 1A) such as a tablet terminal of which a display has a relatively large display area is applied to the work supporting terminal device 1 will be described with reference to FIGS. 2 to 8. The functional units included in the work supporting terminal device 1A will be described by being assigned postfix A. In the present embodiment, the event which can be incomprehensible from the checklist is referred to as a trouble, and a trouble which occurred in the past is referred to as a trouble case.

FIG. 2 is a first diagram showing an example of the checklist for routine inspection displayed by the work supporting terminal device according to the first embodiment of the present invention.

The worker performs a predetermined operation from the user interface 40A of the work supporting terminal device 1A, and selects an inspection work to be supposed to be performed. The user interface 40A outputs identification information of the inspection work selected by the user to the data processor 20A. In the data processor 20A, the checklist generator 201A obtains the identification information, reads checklist information associated with the identification information from the storage 60A, and generates a display image of the checklist. The checklist generator 201A outputs and displays the generated display image of the checklist to and on the display 30A. The checklist of FIG. 2 is the display image of the checklist generated by the checklist generator 201A in this manner. In a case where the inspection work to be performed is previously determined, if the worker performs an operation of reading the inspection work instead of selecting the inspection work, the checklist generator 201A can display the display image of FIG. 2.

The worker goes around the facilities installed in the plant and performs the inspection work by referring to the checklist displayed on the display 30A. Based on the work content of FIG. 2, the worker checks whether or not the inspection item satisfies a criterion set on the checklist, and performs a touch operation in an OK field of the inspection item in a case where the inspection item satisfies the criterion. If the user interface 40A detects the touch operation, information indicating that the touch operation is received or coordinate information where the touch operation is performed are output to the data processor 20A. In the data processor 20A, the checklist generator 201A obtains these information items, identifies an OK field or an NG (no good, fault) field of an inspection item on which the touch operation is performed from the obtained coordinate information, and records the inspection item and the inspection result (OK or NG (no good, fault)) for the inspection item in the storage 60A such that the inspection item and the inspection result are associated with each other. The checklist generator 201 A generates a display image obtained by displaying a check mark on the item on which the worker performs the touch operation, and outputs the generated display image to the display 30A. Accordingly, the worker can perform the inspection work of the facilities and can record the inspection results.

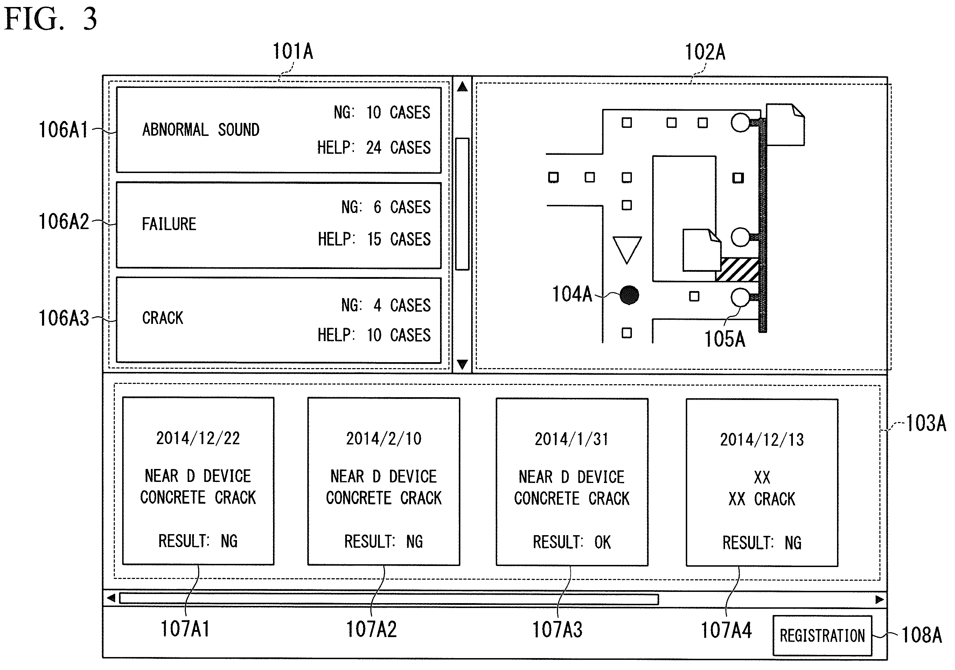

However, there is a possibility that the worker will meets a trouble which is not described in the checklist when the worker performs the inspection works of the facilities, or for a period during which the worker moves to another inspection place. A problem which is related to the facility to be inspected may occur in some cases, or a problem which is not directly related to the facility to be inspected may occur in some cases. For example, there is a possibility that the worker will meet a trouble of "smoke rises from AA tank" when the worker checks an inspection item of "water level of AA tank is maintained in range of XX to YY. Alternatively, there is a possibility that the worker will meet a trouble that a ladder for climbing up "AA tank" is broken by rust when the worker performs the inspection work related to "AA tank". As stated above, when the trouble which is not included in the list of routine inspection works but is abnormal or the trouble which becomes dangerous if the trouble is left as it is occurs, the worker may be troubled with responding to the trouble in many cases. Thus, the work supporting terminal device 1A of the present embodiment provides a trouble supporting function in order to prepare for such a situation. Specifically, if the worker presses a HELP button 100A, the work supporting terminal device 1A presents information regarding the trouble case which occurred in the past. Hereinafter, the trouble supporting function of the present embodiment will be described with reference to FIG. 3.

FIG. 3 is an example of a trouble supporting information display image displayed by the work supporting terminal device according to the first embodiment of the present invention.

FIG. 3 is an example of the trouble supporting information display image displayed when the worker selects the inspection item (for example, checklist ID = 211) on which the inspection work is being performed and presses the HELP button 100A when the worker notices the occurrence of the trouble. The trouble supporting information display image includes a category display area 101 A, a map display area 102A, and a summary display area 103A.

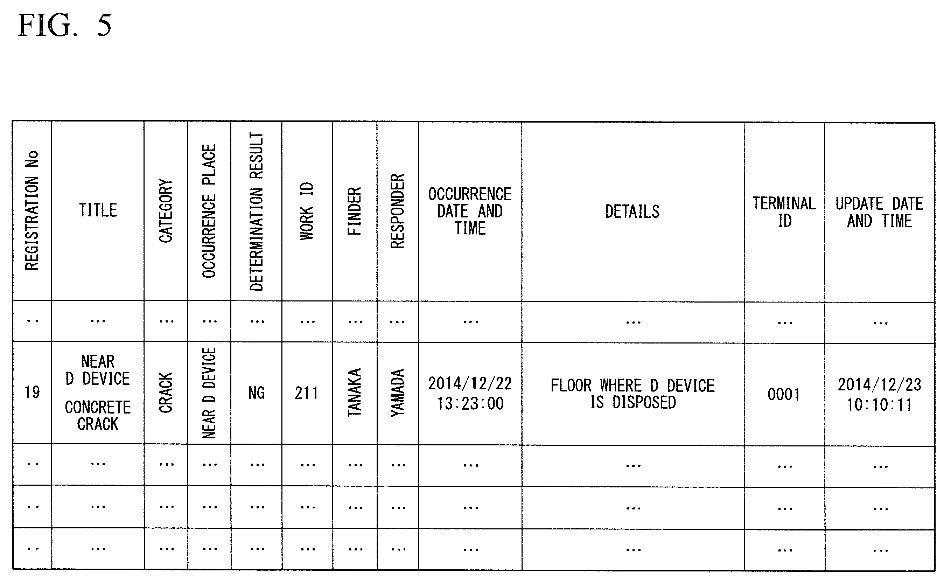

The category display area 101A is an area for displaying a classification result obtained by classifying the trouble cases which occurred in the past according to the kind of trouble. Particularly, in a state in which the worker selects a certain item (in this case, ID = 211) of the checklist, in a case where the display image is called, the category information generator 203A reads information items regarding the trouble cases, which are stored in association with a place where a facility ("D device") related to inspection item ID = 211 is installed, from the storage 60A, classifies the read information items according to the kind of trouble, and counts the number of trouble cases belonging to each classification. The category information generator 203A generates a display image obtained by arranging the classifications in descending order of the number of troubles cases as the counting result, and displays the generated display image on the display 30A. The trouble case stored in association with the place where the facility is installed shows that the trouble case occurs in the place where the facility is installed or near the place where the facility is installed. Category panels 106A1, 106A2 and 106A3 shown in FIG. 3 show the classification results performed by the category information generator 203A. For example, the display of the category panel 106A1 shows that the number of trouble cases related to "abnormal sound" is 24 cases ("Help: 24") in the past and the number of cases determined to be finally abnormal among these trouble cases is 10 cases ("NG: 10"). Similarly, the category panel 106A2 shows that the number of trouble cases classified as "failure" is 15 cases in the past and 6 cases among these trouble cases are determined to be abnormal, and the category panel 106A3 shows that the number of trouble cases classified as "crack" is 10 cases in the past and 4 trouble cases are determined to be abnormal. As described above, the category information generator 203A arranges the category panels 106A1, 106A2 and 106A3 in descending order of the number of Help cases, and displays the arranged category panels. Accordingly, the worker can ascertain which kind of trouble occurred more frequently in the past near the place where the inspection work is currently performed. The worker can recognize the kind by which the currently occurring trouble is classified by referring to the displays of the category panels. The information regarding the past trouble case stored in the storage 60A will be described below with reference to FIG. 5. The category panels 106A1, 106A2 and 106A3 are collectively referred to as category panels 106A.

The map display area 102A is an area for displaying map information in a predetermined range with a position where the work supporting terminal device 1A is present as its center. The map information generator 202A obtains current positional information of the work supporting terminal device from the positional information obtainer 10A. The map information generator 202A reads information, which is related to a map including a road, a building or a facility installed near the current position, from the storage 60A based on the obtained positional information. The map information generator 202A generates map information from the information regarding the road map and displays the generated map information on the display 30A. In a state in which the worker selects a certain inspection item of the checklist, in a case where the trouble supporting information display image is read, the map information generator 202A generates map information obtained by displaying a place (for example, an installation place of "D device") where the facility related to the selected inspection item is set in different color. In FIG. 3, a facility 104A represents a place where the facility related to the inspection item selected by the worker is set. The worker can refer to the trouble cases which occurred in the past in the same place by referring to the category display area 101A while checking the occurrence position of the trouble by referring to the map display area 102A.

The summary display area 103A is an area for displaying summary information of the trouble case which occurred in the past. The summary information is information including an occurrence date and time of the trouble, a title of the trouble case and the result (OK or NG) of the trouble case. The summary information generator 204A reads the information of the trouble case which occurred in the past from the storage 60A, and generates the summary information for each information item of the trouble case. Summary panels 107A1, 107A2, 107A3 and 107A4 shown in FIG. 3 represent the summary information items generated by the summary information generator 204A. The summary information items of the trouble cases are displayed in the summary panels 107A1, 107A2, 107A3 and 107A4. For example, the information items of the occurrence date and time ("2014/12/22"), the title ("concrete crack near D device") and the result ("NG") are displayed in the summary panel 107A1. The same is true of the summary panels 107A2 to 107A4. Particularly, in a state in which the worker selects a certain item (in this case, ID = 211) of the checklist, in a case where the trouble supporting information display image is called, the summary information generator 204 reads the information of the trouble case stored in association with the installation place of the facility ("D device") related to the inspection item ID = 211 from the storage 60, and generates the summary panels to output the generated summary panels to the display 30. In this case, for example, the summary information generator 204 may arrange the summary panels in order of the date and time when the trouble occurs from the latest summary panel, and may display the arranged summary panels. Alternatively, the summary information generator 204 may give color to the summary panels according to the urgency or influence of the trouble case, and may display the summary panels. The summary panels 107A1, 107A2, 107A3 and 107A4 are collectively referred to as summary panels 107A.

If the worker selects an arbitrary category panel 106A by performing the touch operation on the arbitrary category panel among the category panels 106A displayed in the category display area 101A, the summary information generator 204A extracts the summary panels 107A belonging to the category corresponding to the selected category panel 106A, and generates the display image of the summary display area 103 including the summary panels 107A. The summary display area 103A of FIG. 3 is a display example of the summary panel 107A when the worker selects the category panel 106A3. If the worker selects the category panel 106A3, the summary information generator 204A reads information of the past trouble case of which the category is classified as "crack" (category panel 106A3) and which is stored in association with the place where the facility related to the inspection item selected by the worker is installed from the storage 60A, and generates the display image of the summary display area 103A including these summary panels. As described above, the worker can extract only the summary information of the similar trouble case among the trouble cases which occurred in the past in the same place by selecting the category among the categories displayed in the category display area 101A, and can display the extracted summary information. Accordingly, the worker easily finds the summary information of the case similar to the currently occurring trouble. In this case, the worker can narrow the summary information to target summary information by selecting the target category panel 106A among the plurality of category panels 106A, and thus, it is not necessary to perform a complicated operation such as a search operation accompanied by a character input.

If the worker selects an arbitrary place from the map information displayed in the map display area 102A through the touch operation, the summary information generator 204A reads the information items of the trouble cases stored in association with the selected place from the storage 60A, and generates the display image of the summary display area 103 including the summary panels 107A corresponding to the trouble cases. For example, if the worker selects the category panel 106A3 and then selects the facility 104A, the summary information generator 204A regenerates the display image including the summary panels 107A of the trouble cases, which include cases other than the category classified as "crack" and occur near the installation place of "D device".

If the worker performs the touch operation on a facility 105A, the summary information generator 204A generates the display image including the summary panel of the trouble case stored in association with the installation place of the facility 105A. For example, in a case where the facility 104A and the facility 105A are the same kind of facility and the worker does not find useful information among the summary information items corresponding to the facility 104A, the worker selects the facility 105A which is the same kind of facility and can find whether or not the target trouble case occurs near the facility 105A. Even in such a case, according to the work supporting terminal device 1A of the present embodiment, the worker can display the summary information by selecting the target facility from the displayed map information through the touch operation, and thus, it is not necessary to perform a complicated operation such as a search through the character input. In addition, a figure or a character indicating the influence or urgency of the trouble information may be displayed in the summary panel 107A.

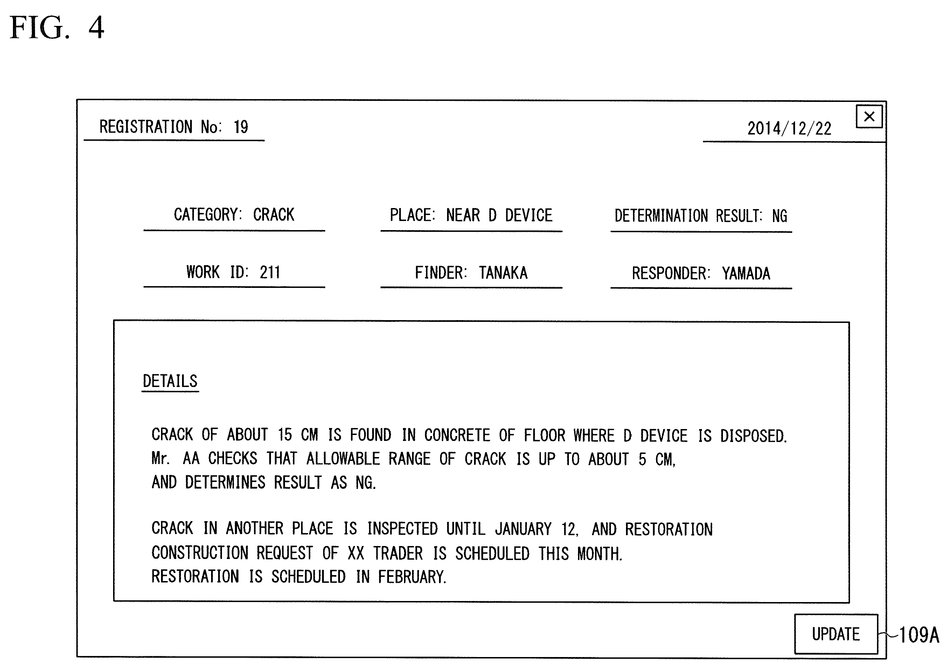

FIG. 4 is an example of the trouble detailed information display image displayed by the work supporting terminal device according to the first embodiment of the present invention.

The trouble detailed information display image is a screen displayed as a pop-up screen on a front surface of the trouble supporting information display image if the worker performs the selection operation on the summary panel 107A in the trouble supporting information display image (FIG. 3). For the trouble that the worker meets in reality, candidates of the summary panel 107A that includes information of the trouble case capable of being referred to are displayed in the procedure described with reference to FIG. 3, that is, by selecting the category panel 106A or selecting the position on the map information. The worker selects one summary panel 107A among the summary panels through the touch operation. By doing this, the user interface 40A receives the selection operation and outputs to the data processor 20A the information indicating that the touch operation is received or the coordinate information on which the touch operation is performed. In the data processor 20A, the trouble content manager 205A obtains these information items, identifies the summary panel 107A on which the touch operation is performed from the obtained coordinate information, and specifies the identification information of the trouble case corresponding to the summary panel 107A. The trouble content manager 205A reads the detailed information regarding the trouble case from the storage 60A by using the identification information. The trouble content manager 205A generates the display image of the trouble detailed information display image by using the read information and outputs the generated display image to the display 30A. The display 30A displays the display image of the trouble detailed information display image.

FIG. 4 is a display example of the trouble detailed information display image displayed in a case where the worker selects the summary panel 107A. On the trouble detailed information display image, the items of a registration number ("19"), a trouble occurrence date ("2014/12/22"), the kind of trouble ("crack"), an occurrence place of the trouble ("near D device"), a determination result ("NG"), the work ID ("211 "), a finder ("Tanaka"), and a responder ("Yamada") and the details of the trouble case are displayed. The detailed information of the case that is not able to be displayed on the summary panel 107A is displayed in the details of the trouble case and the worker can find the past trouble case similar to the currently occurring trouble. On the trouble detailed information display image, the information indicating the influence or urgency of the trouble case may be displayed in addition to the aforementioned information items.

Similarly to the operation of narrowing the candidates of the summary panel 107A capable of being referred to for the currently occurring trouble, the worker can access the detailed information of the past trouble without performing the character input operation. Thus, the worker can find the useful information without performing the complicated operation even though the trouble occurs in reality. If the information capable of being referred to is found, the worker can respond to the currently occurring trouble by referring to the detailed description of the trouble case. According to the present embodiment, the worker can promptly and appropriately respond to the trouble by expeditiously finding the trouble case with an intuitive operation without performing the complicated work.

Hereinafter, a data table that stores the information displayed on the trouble detailed information display image will be described.

FIG 5 is an example of a trouble information management table stored by the work supporting terminal device according to the first embodiment of the present invention.

As shown in the drawing, the trouble information management table includes the items of "registration No", "title", "category", "occurrence place", "determination result", "work ID", "finder", "responder", "occurrence date and time", "details", "terminal ID" and "update date and time". The identification information of the trouble case is set to "registration No". Information of the simple content of the trouble case displayed in the summary panel 107 is set to "title". For example, category information such as "abnormal sound", "failure" or "crack" is set to "category". Information indicating the place where the trouble occurs is set to "place". A value indicating whether or not the trouble is abnormal is set to "determination result". Specifically, any value of "OK", "NG" and "holding" is set. "Holding" is a value set in a case where it is not possible to determine whether or not the trouble is abnormal at a current point of time. An ID (value of "ID" of the work list of FIG. 2) of the inspection item for the facility near the trouble occurrence place is set to "work ID". The name of the worker who finds the trouble is set to "finder", and the name of the worker who responds to the trouble is set to "responder". The date and time when the trouble is found is set to "occurrence date and time". The information such as the detailed content of the trouble and the detailed content of the responding method is set to "details". The identification information of the work supporting terminal device 1A that registers the trouble case information is set to "terminal ID". The date and time when the values of the items are updated is set to "update date and time". For example, in a case where there is time to spare until the worker responds to the trouble after the worker finds the trouble, the date and time when the worker responds to the trouble are set. In addition to these items, the items of "influence" or "urgency" may be set in the trouble information management table. For example, "high" or "small" is set to "influence", and "high" or "low" is set to "urgency". The storage 60A stores the trouble information management table. Hereinafter, a process of registering and updating the information in the trouble information management table will be described.

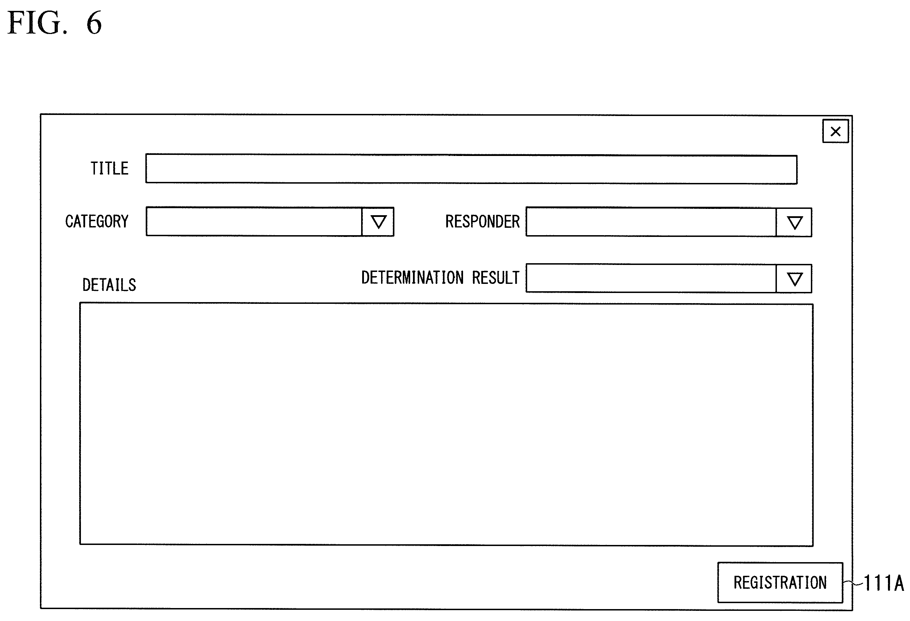

FIG. 6 is an example of a trouble case registration screen displayed by the work supporting terminal device according to the first embodiment of the present invention.

The trouble case registration screen is displayed if the worker performs the touch operation on a registration button 108A of the trouble supporting information display image (FIG. 3). Specifically, the user interface 40A detects the touch operation performed by the worker on the registration button 108A, and outputs the information indicating that the touch operation is performed or the coordinate information on which the touch operation is performed to the data processor 20A. In the data processor 20A, the trouble content manager 205A obtains these information items, generates the display image of the trouble case registration screen based on the fact that the touch operation is performed on the registration button 108A, and outputs the generated display image to the display 30A. The display 30A displays the display image of the trouble case registration screen. In a case where the updating process is performed on the already registered trouble content, the worker performs the touch operation on an update button 109A of the trouble detailed information display image of FIG. 4. By doing this, the trouble content manager 205A generates the display image obtained by setting the information items displayed on the trouble detailed information display image to the items of the trouble case registration screen, and outputs the generated display image to the display 30A.

The worker sets the items, "title", "category", "responder", "determination result" and "details" of the trouble case registration screen. Title information displayed in the summary panel 107A is input to "title". The detailed content or responding method of the trouble is input to "details". A value of "abnormal sound", "failure" or "crack" is selected and the selected value is input to "category". The name of the responder when the trouble is responded is selected, and the selected name is input to "responder". A value of "OK", "NG" and "holding" is selected, and the selected value is input to "determination result". The "category", "responder" and "determination result" can be selected from a drop-down list, and the trouble information can be registered as far as possible even though the character input work is not performed. In addition to these items, "influence" or "urgency" is provided. "High" or "small" may be selected and the selected value may be input to "influence". "High" or "low" may be selected and the selected value may be input to "urgency".

If the worker inputs these items and performs the touch operation on a registration button 111 A, the user interface 40A detects the touch operation performed by the worker on the registration button 111A, and outputs the information indicating that the touch operation is performed or the coordinate information on which the touch operation is performed to the data processor 20. In the data processor 20A, the trouble content manager 205 obtains the information, writes the values input to the items in the corresponding items of the trouble information management table (FIG. 5) stored in the storage 60A based on the fact that the touch operation is performed on the registration button 111A, and stores the written values. The trouble content manager 205A respectively sets appropriate values to the items of "registration No", "place", "work ID", "finder", "occurrence date", "terminal ID" and "update date" of which input fields are not present on the trouble case registration screen, and registers the set values in the trouble information management table. For example, a value numbered by the trouble content manager 205A is set to "registration No". The trouble content manager 205A obtains the current positional information of the work supporting terminal device 1A from the positional information obtainer 10A, and sets information of the place where the inspecting target facility near the current position is installed, which is obtained by being compared with the map information stored in the storage 60A, to "place". In a case where there is an item selected on the work list, the trouble content manager 205A sets the ID to "work ID". In a case where there is no item selected on the work list, the trouble content manager 205A obtains an arbitrary work ID for the inspecting target facility detected when the value of "place" is set from the information of the checklist stored in the storage 60A, and sets the obtained work ID. At the time of performing the current inspection work, the storage 60A stores authentication information when the worker performs a log-on operation on the work supporting terminal device 1, and the trouble content manager 205A sets the name of the worker obtained based on the identification information from the storage 60A to "finder". The trouble content manager 205A sets an initial registration date and time obtained using a timer function (not shown) included in the work supporting terminal device 1 to "occurrence date and time". The trouble content manager 205A sets the identification information of the work supporting terminal device 1A to "terminal ID". The trouble content manager 205A sets the date and time obtained using the timer function to "update date and time". Accordingly, the number of input items is suppressed, and thus, an input burden of the worker can be reduced.

As stated above, in a case where the worker meets the trouble that is not able to respond to the trouble using the checklist or manual for a period during which a routine inspection work is performed, the trouble detailed information display image is displayed, and thus, the candidates of the past trouble case related to the currently occurring trouble can be narrowed with a simple operation.

The example in which the trouble detailed information display image is displayed after the inspection items is selected on the checklist has been described until now. Hereinafter, the operation in a case where the past trouble case is found without selecting the inspection item on the checklist will be described.

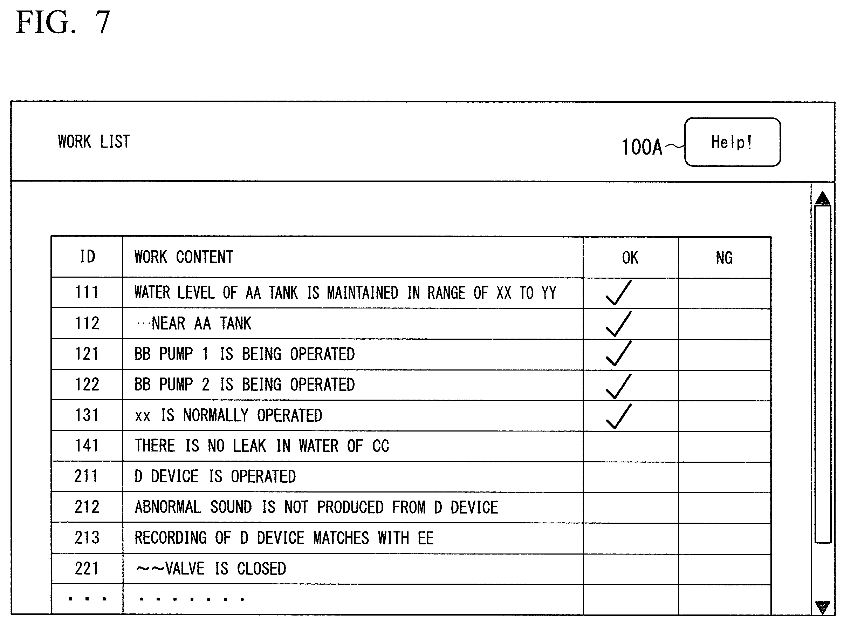

FIG. 7 is a second diagram showing an example of the checklist for routine inspection displayed by the work supporting terminal device according to the first embodiment of the present invention.

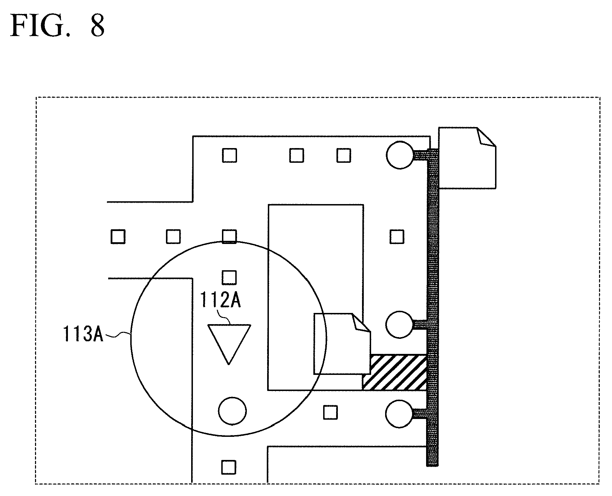

FIG. 8 is a diagram showing an example of the map information displayed by the work supporting terminal device according to the first embodiment of the present invention.

FIG. 2 shows the display image of the checklist in the state in which the worker selects the work ID = 211, whereas the checklist illustrated in FIG. 7 is a checklist in a case where the worker does not select a specific work ID. Even in such a state, the worker can display the trouble detailed information display image by performing the touch operation on the HELP button 100A if the trouble occurs. In this case, the category information generator 203A obtains the current positional information of the work supporting terminal device 1 from the positional information obtainer 10A, and reads the past trouble case information occurring in a predetermined range (range surrounded by a circle 113A of FIG. 8 to be described below) with the positional information as its center from the trouble information management table of the storage 60A. The category information generator 203A counts the read information of the trouble case for each category, and generates the display image obtained by arranging the category panels in descending order of the number of counted information items. The map information generator 202A obtains the current positional information of the work supporting terminal device 1 from the positional information obtainer 10A, an degenerates the map information obtained by displaying the map information in a predetermined range having the positional information as its center. The map information generator 202A outputs the information of the installation position of the facility present in the predetermined range having the obtained current positional information as its center to the category information generator 203A. Here, a display example of the map display area 102A in a case where the trouble detailed information display image is displayed without selecting the specific item of the checklist is shown in FIG 8.

In a case where the specific item of the checklist is selected, the map information generator 202A generates the display image obtained by giving color to the position of the facility related to the selected inspection item as described in FIG 3. In a case where the specific item is not selected, the map information generator 202A generates the display image displayed by overlapping a circle 113A having a radius of a predetermined length with the current position (position 112A) by the positional information obtainer 10A as its center with the map information. The category information generator 203A selects the information of the trouble case which occurred in the past within the range of the circle 113A from the trouble information management table, and generates the display image to be displayed on the category display area 101 A. Specifically, the category information generator 203A reads a record having the place associated with the information of the installation position of the facility included within the range of the circle 113A as a value of the item of "occurrence place" from the trouble information management table. The summary information generator 204A reads the trouble information from the trouble information management table by the same method, and generates the display image of the summary display area 103A.

The worker can ascertain the range corresponding to the information of the trouble case which is currently displayed in the category display area 101A or the summary display area 103A when viewed from the display of the circle 113A.

The worker can widen or reduce the range of the circle 113A by performing a pinching-in or pinching-out operation. For example, in a case where the worker performs the pinching-out operation on the circle 113A, the map information generator 202A obtains the information corresponding to the length of the diameter of the circle indicated by the operation through the user interface 40A, and generates the display image obtained by displaying the circle 113A having the obtained diameter. The map information generator 202A outputs the information indicating the installation position of the facility included in the range of the enlarged circle 113A to the category information generator 203A and the summary information generator 204A. The category information generator 203A reads the trouble information occurring in the place associated with the installation position of the facility included in the obtained information while referring to "occurrence place" of the trouble information management table and generates the display image displayed in the category display area 101A. Similarly, the summary information generator 204A generates the display image including the summary panel 107A of the trouble case occurring in the place included in the range of the newly designated circle 113A. As mentioned above, in a case where the specific item of the checklist is not selected, the worker can widen or reduce the display range of the trouble information by designating the range in the map display area 102A.

As mentioned above, according to the present embodiment, the target facility of the inspection item is specified by selecting the item of the checklist, and the information capable of being referred to for the currently occurring trouble can be found among the trouble cases associated with the place of the specified facility. The occurrence range of the trouble case is designated from the map information, and thus, the information capable of being referred to among the trouble cases occurring in this range can be found. Even in a case where the trouble case is found with any operation, the worker can narrow the trouble cases as the candidates by selecting the category panel 106A. For the narrowed trouble cases, the worker ascertains whether or not it is necessary to respond to the currently occurring trouble or how to respond to the trouble is in a case where it is necessary to respond to the trouble by referring to the content of the trouble detailed information display image (FIG. 4). Accordingly, there is not a possibility that the worker responds to the trouble based on their own determination without taking the appropriate responding method to the trouble, and thus, the problem will worsen. Further, there is not a possibility that the worker leaves the problem as it is, and thus, the problem will worsen. The worker does not take their time to call a person capable of responding to the problem. In a series of operations, since it is not necessary to perform the character input operation, the information of the target trouble case can be promptly found.

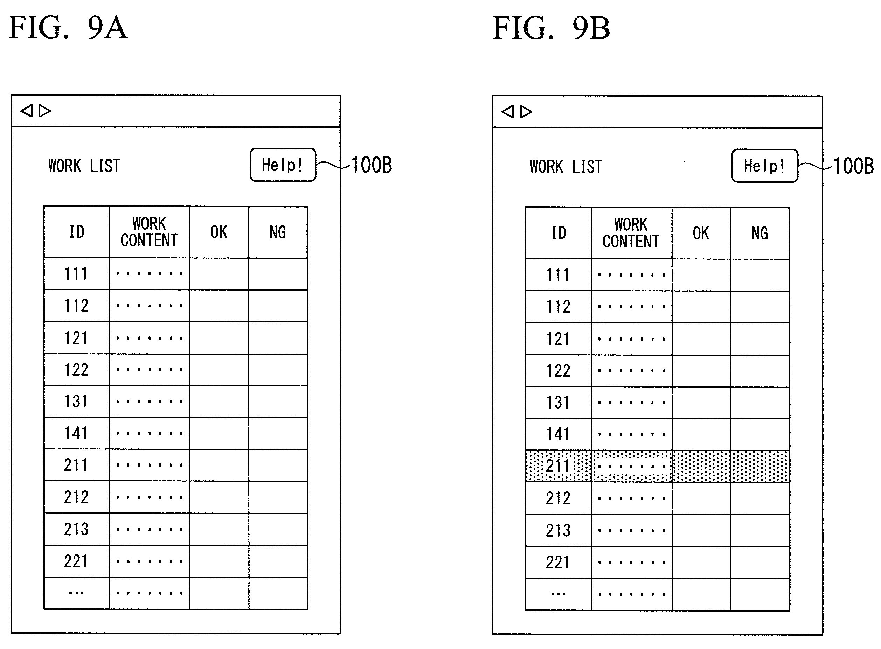

The operation of the work supporting terminal device 1A in a case where a tablet terminal is used has been described until now. Hereinafter, the operation and display image in a case (referred to as a work supporting terminal device 1B) where a display device such as a smart phone which includes a smaller display is applied as the work supporting terminal device 1 will be described with reference to FIGS. 9 to 13.

FIGS. 9A and 9B are third diagrams showing an example of the checklist for routine inspection displayed by the work supporting terminal device according to the first embodiment of the present invention.

FIGS. 9A and 9B show a display image of a checklist generated by a checklist generator 201B of the work supporting terminal device 1B. The worker performs the inspection work of the plant by using the display image of the checklist. If an event that can be incomprehensible from the checklist, the worker performs a touch operation on a HELP button 100B. FIG. 9A shows a state in which the worker does not select the inspection item of the checklist. FIG. 9B shows a state in which the worker selects the inspection item of the checklist. In the work supporting terminal device 1 B, a range of the trouble case read from the trouble information management table is different depending on whether or not a certain inspection item of the checklist is selected. For example, in a case where the worker does not select the inspection item of the checklist as shown in FIG. 9A, a category information generator 203B obtains the positional information of the work supporting terminal device 1B from the positional information obtainer 10B, and specifies the place where the facility present near the obtained positional information is installed. The category information generator 203B reads information of a trouble case having the specified place as a value of "occurrence place" from the trouble information management table. In a case where the worker selects the inspection item (ID = 211) of the checklist as shown in FIG. 9B, the category information generator 203B reads information of a trouble case having the inspection place of ID = 211 as a value of "occurrence place" from the trouble information management table.

The category information generator 203B classifies the read trouble information items on a per "category" basis, and generates the display image obtained by arranging the category panels corresponding to the categories in descending order of the number of registered trouble cases. The category information generator 203B outputs the generated display image to a display 30B, and the display 30B displays the display image.

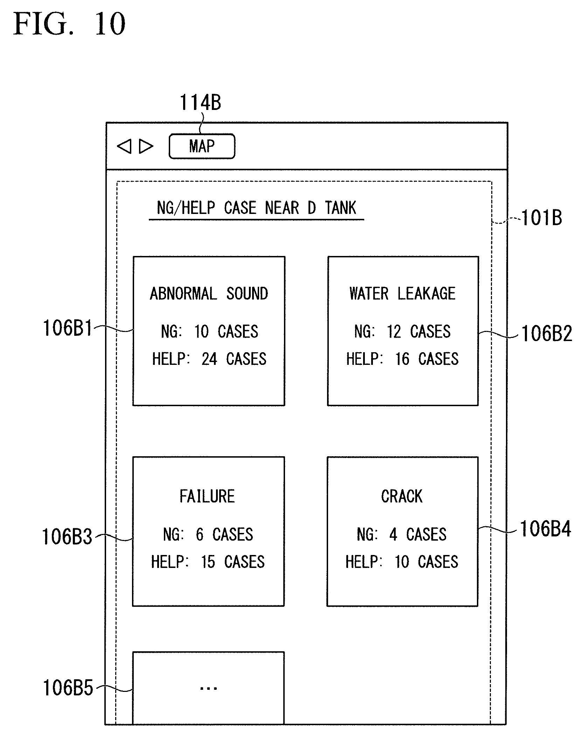

FIG. 10 is a second diagram showing an example of the trouble supporting information display image displayed by the work supporting terminal device according the first embodiment of the present invention.

The trouble supporting information display image illustrated in FIG. 10 includes a category display area 101B, and a map button 114B. The work supporting terminal device 1B has a small display area of the display 30B. Accordingly, unlike the work supporting terminal device 1 A, a data processor 20B displays only the display image (category display area 101B) generated by the category information generator 203B. In the example of FIG. 10, the number of times the category of "abnormal sound" corresponding to the category panel 106B1 occurs is 24, and thus, the occurrence number of times is the largest. Subsequently, the number of times the category of "water leakage" corresponding to the category panel 106B2 occurs is 16, and thus, the occurrence number of times is the second largest. Hereinafter, the same is true of the categories panels 106B3, 106B4 and 106B5. The category information generator 203B generates the display image obtained by arranging the category panels 106B1, 106B2, 106B3, 106B4 and 106B5 in descending order of the number of registered trouble cases.

The data processor 20B displays the map button 114B in the circumference of the display 30B. If the worker performs the touch operation on the map button 114B, the user interface 40B detects the touch operation, and outputs coordinate information on which the touch operation is performed to the data processor 20B. The data processor 20B detects that the touch operation is performed on the map button 114B based on the obtained coordinate information, and instructs the map information generator 202B to generate the map information.

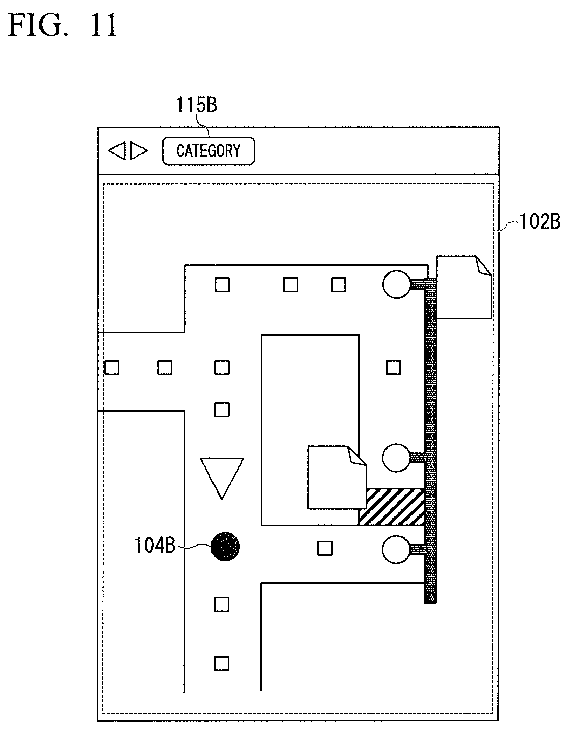

FIG. 11 is a third diagram showing an example of the trouble supporting information display image displayed by the work supporting terminal device according to the first embodiment of the present invention.

The trouble supporting information display image illustrated in FIG. 11 includes a map display area 102B, and a category button 115B. The map information generator 202B obtains the current positional information of the work supporting terminal device 1B from the positional information obtainer 10B, and reads a current position and information regarding a map near the current position from the storage 60B based on the obtained positional information. The map information generator 202B generates the map information of the plant near the current position from the read information regarding the map, and displays the generated map information on the display 30B. In a case where the worker does not select the inspection item of the checklist as shown in FIG. 9A, the map information generator 202B generates the display image obtained by overlapping a circle having a diameter of a predetermined length with the current position as its center with the map. In a case where the worker selects the inspection item (ID = 211) of the checklist as shown in FIG. 9B, the map information generator 202B generates the map information obtained by displaying the place of the facility corresponding to the selected inspection item in different color. FIG. 11 is a display image in a case where the worker selects the inspection item of the checklist. The facility 104B represents the place corresponding to the inspection item selected by the worker.

The data processor 20B displays the category button 115B in the circumference of the display 30B. If the worker performs the touch operation on the category button 115B, the user interface 40B detects the touch operation, and outputs coordinate information on which the touch operation is performed to the data processor 208. The data processor 20B detects that the touch operation is performed on the category button 115B based on the obtained coordinate information, and instructs the category information generator 203B to generate the display image displayed on the category display area 101B. That is, if the worker performs the touch operation on the category button 115B, the display image transitions to the display image displayed on the category display area 101B illustrated in FIG 10. If the worker performs the touch operation on the map button 114B, the display image transitions to the display image displayed on the map display area 102B illustrated in FIG. 11. As stated above, in the work supporting terminal device 1B, it is possible to switch the display between the category display area 101B and the map display area 102B.

In a case where the worker displays the map information without selecting the inspection item of the checklist and performs the touch operation on the category button 115B after a range designation operation (pinching-in or pinching-out) of enlarging or reducing the circle indicated by the map information is performed, the category information generator 203B performs a process of classifying and counting trouble cases occurring in the range of the circle after the circle is enlarged or reduced, and generates the display image displayed in the category display area 101B.

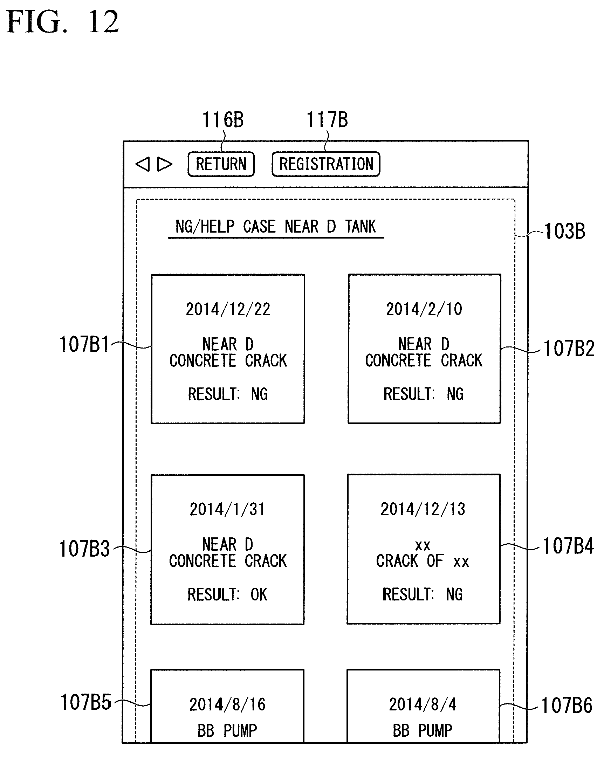

FIG. 12 is a fourth diagram showing an example of the trouble supporting information display image displayed by the work supporting terminal device according to the first embodiment of the present invention.

The trouble supporting information display image illustrated in FIG. 12 includes a summary display area 103B, a return button 116B, and a registration button 117B. This screen is displayed if the worker performs the touch operation on one of the category panels 106B1 to 106B5 (FIG. 10). In a case where the category panel 106 is selected through the touch operation, the summary information generator 204B obtains the category indicated by the category panel selected by the worker and information of the place ("near D tank" in the example of FIG. 10) where the trouble regarding the category panel occurs through the user interface 40B. The summary information generator 204B reads a record in which a value of "occurrence place" of the trouble information management table is "near D tank" and the value of "category" is equal to the value of the obtained category, and generates the display image including the summary panel.

If the worker performs the touch operation on one (for example, the facility 104B) of the facilities to be inspected, which are displayed on the map information of FIG. 11, this screen is displayed. In this case, the data processor 20B obtains the information of the facility selected by the worker through the user interface 40B. The data processor 20B instructs the summary information generator 204B to generate the display image displayed in the summary display area 103B. The summary information generator 204B reads a record in which the value of "occurrence place" of the trouble information management table indicates the installation place of the obtained facility, and generates the display image including the summary panel.

As mentioned above, similarly to the work supporting terminal device 1A, in the work supporting terminal device 1B, the worker can narrow the summary panels as candidates from the category panel and the map information, and can display the summary panel.

If the worker performs the touch operation on the return button 116B, the display image is switched to the display image of FIG 10 in a case where the display image transitions from the display image of FIG. 10 and is switched to the display image of FIG. 11 in a case where the display image transitions from the display image of FIG 11. When the data processor 20B instructs the summary information generator 204B to generate the display image displayed in the summary display area 103B, the data processor stores a transition original screen. If the worker performs the touch operation on the return button 116B, the data processor 20B instructs the map information generator 202B to generate the display image if the transition original screen is the display image of FIG. 10 and instructs the category information generator 203B to generate the display image if the transition original screen is the display image of FIG. 11, based on the storing of the transition original screen. Accordingly, the worker can redisplay the summary panel 107B as the candidate.

If the worker performs the touch operation on the registration button 117B, the trouble content manager 205B displays a trouble case registration screen. The trouble case registration screen of the work supporting terminal device 1 B includes "title", "category", "responder", "determination result" and "details" which are the same input items as those illustrated in FIG. 6. Among these items, the values may be selected, and the selected values may be respectively input to the items of "category", "responder" and "determination result". The worker registers the content of a new trouble case from the trouble case registration screen.

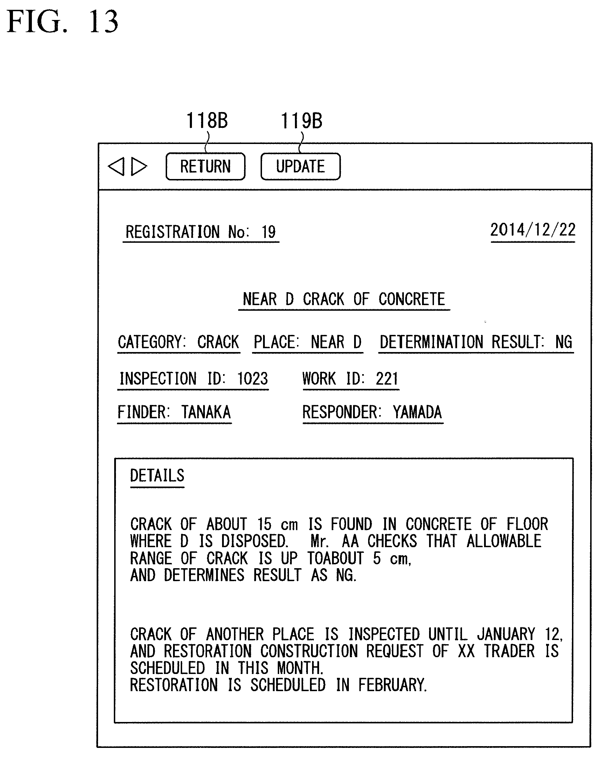

FIG. 13 is a second diagram showing an example of the trouble detailed information display image displayed by the work supporting terminal device according to the first embodiment of the present invention.

The trouble detailed information display image illustrated in FIG. 13 includes an area in which the detailed content of the trouble case is displayed, a return button 118B, and an update button 119B. This screen is displayed if the worker performs the touch operation on one of the summary panels 107B1 to 107B6 (FIG. 12). Specifically, the trouble content manager 205B obtains identification information of the trouble case indicated by the summary panel 107 selected by the worker through the user interface 40B.

The trouble content manager 205B reads a record in which the value of "registration No" of the trouble information management table is equal to the identification information ("19") of the trouble case, and generates the display image of the trouble detailed information display image. The data processor 20B displays the return button 118B and the update button 119B in the circumference of the display 30B.

If the worker performs the touch operation on the return button 118B, the display transitions to the display image illustrated in FIG. 12. If the worker performs the touch operation on the update button 119B, the trouble content manager 205B displays the trouble case registration screen of the work supporting terminal device 1B. The trouble case registration screen of the work supporting terminal device 1 B includes the same input items as those illustrated in FIG 6. For example, the worker can update the contents of "responder", "category", "determination result" and "details".

As described above, according to the work supporting terminal device 1B of the present embodiment, even in a display device such as a smart phone of which the display 30B has a relatively small display area, it is possible to refer to the past trouble case with the same simple operation as that in the first embodiment.

The case where the worker presses the HELP button 100 based on the occurrence of the trouble has been described in the above-mentioned description. However, the data processor 20 may obtain the positional information from the positional information obtainer 10 at predetermined time intervals, and may search the trouble information management table for the trouble case occurring near the obtained positional information. In a case where the trouble case is searched, a pop-up display for giving a notice that "the trouble of XX case which occurred near this position in the past" may be given. Alternatively, the display of such a notice may be given only in a case where the trouble case of a high influence is searched.

In the above-mentioned description, the case where the information of the trouble case is associated with the occurrence place has been described. However, as another example, the information of the trouble case may be stored in association with the type of the inspection work. Specifically, it is assumed that the item of "inspection work type" is provided in the trouble information management table of FIG. 5. For example, it is assumed that tanks are installed in three places of L1, L2 and L3 in the plant and the inspection work of checking the water level in the tank in all of the tanks is included in the checklist. In the case where the information of the trouble case is stored in association with the occurrence place as described above, the trouble case is associated with the places L1, L2 and L3. In such a configuration, as stated above, if the worker selects the inspection item related to the tank of the place L1 and presses the HELP button 100, the category information of the trouble case associated with the place L1 is displayed. Also, on the assumption that the information of the trouble case is stored for each type of the inspection work, if the worker selects the inspection item related to the checking of the water level in the tank of the place L1 and presses the HELP button 100, the category information of the trouble case stored in association with the inspection work of "check water level of tank" is displayed. That is, if the trouble such as abnormal odor or abnormal sound occurs during the water level check of the tank in the place L1, the worker can refer to the category information items of the trouble cases which occurred in the tanks in the places L1, L2 and L3 in the past. In a case where the trouble such as abnormal odor during the water level check of the tank is not associated with the place but is a trouble that is likely to occur during the water level check of the tank, if the information of the trouble case is associated with each type of the inspection work, since the category information of the trouble case can be displayed at the same time without depending on the installation position of the tank, the convenience of the worker is increased.

In the same manner, it is also considered that the information of the trouble case is stored in association with the facility where the inspection work is performed. For example, in a case where multiple types of valves are provided in the plant and a unique trouble that is unpredictable may occur for each type at the time of designing the plant, the category information items of the trouble cases that are likely to occur in the same type of facilities can be displayed at the same time by associating the information of the trouble case with the facility. Similarly, the information of the trouble case may be stored in association with the surrounding environment. In such a configuration, the category information items of the trouble cases that are likely to occur under a high-temperature or high-pressure environment can be displayed at the same time. The items, "inspection work type", "facility" and "environment" may be provided in the trouble information management table of FIG 5. For example, a button capable of selecting any one of "occurrence place", "inspection work type", "facility" and "environment" is displayed in the trouble supporting information display image (FIG. 3). If the worker performs the touch operation on this button and selects any one item, the category information generator 203A switches the category information of the trouble case associated with the selected item to the display displayed until then, and displays the switched display. The worker can display the candidates of the trouble case from various viewpoints by switching the category information of the trouble case for each item (the occurrence place, the inspection work type, the facility or the environment) associated with the inspection item and displaying the switched category information. The information item of the trouble case associated with the occurrence place, the inspection work type, the facility or the environment is an example of the information of the trouble case associated with the inspection item.

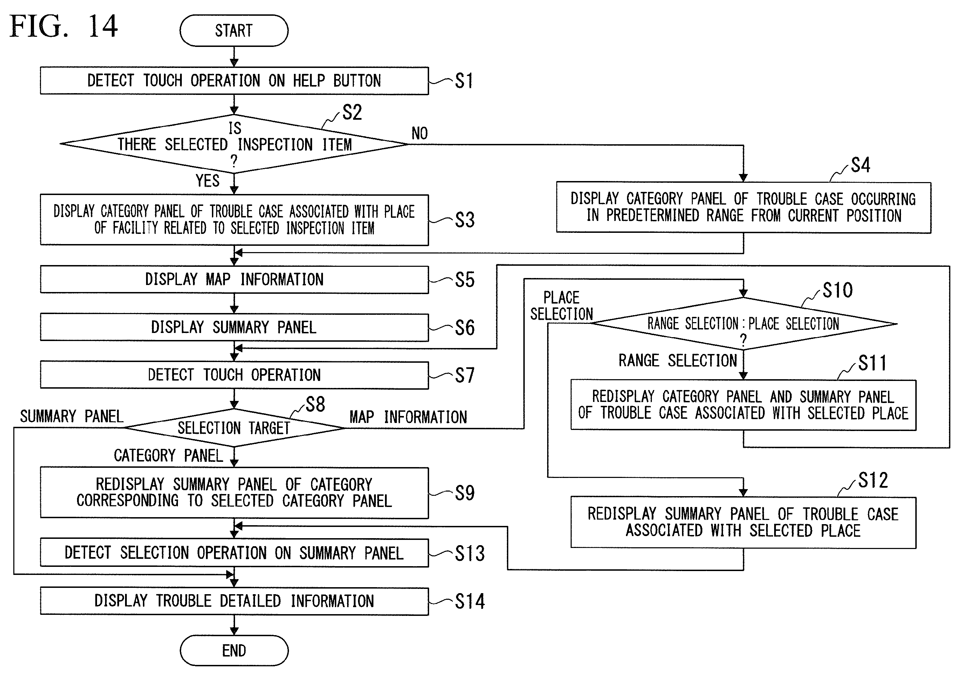

FIG. 14 is a flowchart of the display operation of the work supporting terminal device according to the first embodiment of the present invention. An example of a processing flow of the display operation in the work supporting terminal device 1 A will be described with reference to FIG. 14.

It is assumed that the worker performs a predetermined operation and the inspection work is performed using the checklist generated by the checklist generator 201A. It is assumed that the worker finds the event which can be incomprehensible from the checklist and performs the touch operation on the HELP button 100A. By doing this, the user interface 40A detects the touch operation (step S1), and it is determined whether or not the HELP button 100A is pressed and whether or not there is the selected inspection item. In a case where there is the selected inspection item, the identification information is output to the data processor 20A. In the data processor 20A, the category information generator 203A determines whether or not there is the selected inspection item (step S2), and in a case where there is the selected inspection item (step S2; Yes), the category information generator 203A reads the information items of the trouble cases associated with the place of the facility related to the selected inspection item from the trouble information management table, and classifies the read information items of the trouble cases according to the category. The category information generator 203A gives a high priority to the category information items in descending order of the number of trouble cases belonging to each category. The category information generator 203A generates the display image obtained by arranging the category panels 106A corresponding to the categories in sequence from the category having the high priority. The display 30A displays the display image in a predetermined display area (category display area 101A) (step S3).

In a case where there is no the selected inspection item (step S2; No), the category information generator 203A reads the past trouble cases information occurring in the predetermined range from the trouble information management table based on the current positional information of the work supporting terminal device 1 which is obtained from the positional information obtainer 10A. The category information generator 203A classifies the information items of the read trouble cases for each category, and gives a high priority to the information items of the trouble cases in descending order of the number of trouble cases included in the category. The category information generator 203A generates the display image obtained by arranging the category panels 106A in sequence from the category having the high priority. The display 30A displays the display image in a predetermined display area (category display area 101A) (step S4).

Thereafter, the map information generator 202A generates the map information within the predetermined range with the positional information as its center based on the current positional information of the work supporting terminal device 1 which is obtained from the positional information obtainer 10A. The display 30A displays the map information in a predetermined display area (map display area 102A) (step S5).

Subsequently, the summary information generator 204A reads the information of the trouble case from the trouble information management table, and generates the summary information for each information item of the trouble cases. The summary information generator 204A generates the display image including the summary panels 107A corresponding to the summary information items. The display 30A displays the display image in a predetermined display area (summary display area 103A) (step S6).

Thereafter, the user interface 40A detects the touch operation performed by the user on the category panel, the map information and the summary panel (step S7). In a case where the selection target is the summary panel (step S8: summary panel), the trouble content manager 205A performs the process of step S14 to be described below.

In a case where the selection target is the category panel (step S8; category panel), the user interface 40A outputs the coordinate information in which the touch operation is detected to the data processor 20A. In the data processor 20A, the summary information generator 204A determines the selected category panel 106A based on the coordinate information, and generates the display image including the summary panel 107A of the category corresponding to the selected category panel 106A. The display 30A redisplays the display image in the summary display area 103A (step S9). The redisplay means that the display of the summary display area 103A is updated with a new display image generated by the summary information generator 204A.

In a case where the selection target is the map information (step S8; map information), the user interface 40A outputs information indicating the type (the touch operation or the pinching-in operation) of the touch operation to the data processor 20A. The data processor 20A determines whether the touch operation is a range selection of selecting the range of the map information or a place selection of selecting a certain place (step S10). The range selection is an operation which becomes valid in a case where there is no inspection item selected in step S2. In a case where the touch operation is the range selection (step S10; range selection), the map information generator 202A outputs the information of the installation position of the facility included in the selected range to the category information generator 203A and the summary information generator 204A. The category information generator 203A reads the information items of the trouble cases in which the value of the item of "occurrence place" is associated with the information of the installation position, and classifies the read information items of the trouble cases for each category. The category information generator 203A counts the number of trouble cases included in the category, gives a high priority to the trouble cases in descending order of the number of trouble cases, and generates the display image obtained by arranging the category panels 106A in descending order of priority. Similarly, the summary information generator 204A generates the display image including the summary panels 107A of the trouble cases occurring in the place included in the selected range. The display 30A redisplays the display image including the category panels 106A and the display image including the summary panels 107A (step S11). The redisplay of the display image including the category panels 106A means that the display of the category display area 101A is updated with a new display image generated by the category information generator 203A. In a case where the determination result of step S10 is the range selection, the process is repeated from step S7 after these display images are redisplayed.

In a case where the touch operation is the range selection (step S10; place selection), the map information generator 202A outputs the information indicating the selected place to the summary information generator 204A. The summary information generator 204A reads the trouble cases associated with the selected place from the trouble information management table, and generates the display image including the summary panels 107A related to the read trouble cases. The display 30A redisplays the display image in the summary display area 103A (step S12).

Thereafter, the user interface 40A detects the touch operation on the summary panel 107A (step S13). The user interface 40A outputs the coordinate information in which the touch operation is detected to the data processor 20A. In the data processor 20A, the trouble content manager 205A identifies the summary panel 107A on which the touch operation is performed from the obtained coordinate information, and reads the detained information related to the trouble case corresponding to the identified summary panel 107A from the trouble information management table. The trouble content manager 205A generates the display image of the trouble detailed information display image by using the read information. The display 30A displays the display image of the trouble detailed information display image as a pop-up display (step S14).

The work supporting terminal device 1 according to the first embodiment includes the storage 60, and the storage 60 stores the trouble information management table or the map information. The trouble case registered in each work supporting terminal device 1 is stored in each storage 60. For example, the work supporting terminal devices 1 communicate with each other through near field wireless communication, and can exchange the information of the trouble case in which trouble cases which are newly registered in the work supporting terminal devices 1 or the registration contents are updated. Specifically, for example, in a case where the trouble case information is transmitted from the work supporting terminal device 1A to the work supporting terminal device 1B, the trouble content manager 205A records a time when the communication with the work supporting terminal device 1B is performed at a previous stage in the storage 60A, and reads this value from the storage 60A. Thereafter, the trouble content manager refers to the items of "terminal ID" and "update date and time" of the trouble information management table, and extracts the data which is newly registered or updated in the work supporting terminal device if the update date and time is later than the time when the communication is performed. The trouble content manager 205A transmits the extracted data to the work supporting terminal device 1B through the communicator 50A. In the work supporting terminal device 1B, the trouble content manager 205B receives the information through the communicator 50B, and registers the received information in the trouble information management table of the storage 60B. The same is true of the case in which the data is transmitted to the work supporting terminal device 1A from the work supporting terminal device 1B.

### (Second Embodiment)

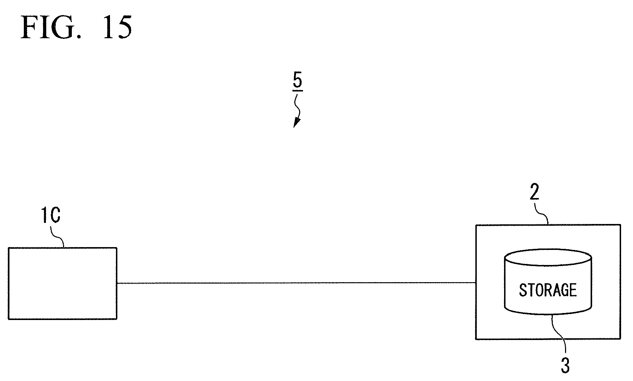

Hereinafter, a work supporting terminal device according to a second embodiment of the present invention will be described with reference to FIG. 15.

FIG. 15 is a schematic diagram of a work supporting system including the work supporting terminal device according to the second embodiment of the present invention.

A work supporting system 5 includes a work supporting terminal device 1C, and a server terminal device 2. The work supporting terminal device 1C and the server terminal device 2 can be communicate with each other through communication means such as wireless communication. In the present embodiment, the trouble information management table is stored in a storage 3 included in the server terminal device 2. The other configuration of the work supporting terminal device 1 is the same as that in the first embodiment. The functional units included in the work supporting terminal device 1C will be described by being assigned a postfix C. If the worker performs the touch operation on a HELP button 100C on the display image of the checklist, a category information generator 203C transmits information of a place where a trouble occurs to the server terminal device 2 through the communicator 50C, and request information of a trouble case occurring in the transmitted place. The server terminal device 2 reads a record in which the value of "occurrence place" is equal to the information of the place received from the category information generator 203C from the trouble information management table stored in the storage 3, and transmits the read information to the work supporting terminal device 1C. In the work supporting terminal device 1C, the category information generator 203C obtains the information through the communicator 50C, and generates the display image including the category panels. Similarly, the summary information generator 204C obtains the trouble information from the server terminal device 2, and generates the display image including the summary panels. The trouble information management table may be stored in a storage device connected to the server terminal device 2. The server terminal device 2 may be provided in a data center present at a long distance.

According to the present embodiment, since the trouble information management table is stored in the server terminal device provided in the plant, and the server terminal device and the storage device provided in the data center at a long distance, the trouble information items can be shared by the work supporting terminal devices 1, and all of the work supporting terminal devices 1 can constantly access the same trouble case.

The above-described work supporting terminal device 1 includes a computer therein. The procedures of the processes of the above-described work supporting terminal device 1 are stored in a computer readable recording medium as a program. The computer reads and executes the program, and thus, the processes are performed. Here, the computer readable recording medium refers to a magnetic disk, a magneto-optic disk, a CD-ROM, a DVD-ROM, or a semiconductor memory. The computer program may be delivered to the computer through a communication line, and the computer that receives the delivered program may execute the program.

The program may be used for realizing a part of the above-mentioned functions. The program may be a so-called differential file (differential program) that is realized by combining the above-mentioned functions with a program which is already recorded in a computer system.

In addition, the components of the above-described embodiments may be appropriately replaced with the known components without departing from the gist of the present invention. The technical scope of the present invention is not limited to the above-described embodiments, and may be variously modified without departing from the gist of the present invention. The trouble case is merely an example of the extra event, and the trouble case information is an example of the extra event information.

As used herein, the following directional terms "forward, rearward, above, downward, right, left, vertical, horizontal, below, transverse, row and column" as well as any other similar directional terms refer to those directions of a device equipped with the present invention. Accordingly, these terms, as utilized to describe the present invention should be interpreted relative to a device equipped with the present invention.

The terms of degree such as "substantially," "about," and "approximately" as used herein mean a reasonable amount of deviation of the modified term such that the end result is not significantly changed. For example, these terms can be construed as including a deviation of at least ± 5 percent of the modified term if this deviation would not negate the meaning of the word it modifies.

The term "configured" is used to describe a component, unit or part of a device includes hardware and/or software that is constructed and/or programmed to perform the desired function.

Moreover, terms that are expressed as "means-plus function" in the claims should include any structure that can be utilized to perform the function of that part of the present invention.

The term "unit" or "part" is used to describe a component, unit or part of a hardware and/or software that is constructed and/or programmed to perform the desired function. Typical examples of the hardware may include, but are not limited to, a device and a circuit.

While preferred embodiments of the invention have been described and illustrated above, it should be understood that these are exemplary of the invention and are not to be considered as limiting. Additions, omissions, substitutions, and other modifications can be made without departing from the scope of the present invention. Accordingly, the invention is not to be considered as being limited by the foregoing description, and is only limited by the scope of the appended claims.

## Claims

1. A work supporting terminal device that supports an inspection work performed on a facility of a plant, the work supporting terminal device comprising:
a category information generator that generates category information items obtained by classifying extra event information items recorded for extra events, which are not included in events to be inspected in the inspection work, among events occurring in the plant, according to the kind of extra event; and
a display that displays the category information items.

2. The work supporting terminal device according to claim 1, further comprising:
a checklist generator that generates a checklist for use in the inspection work of the plant,
wherein the category information generator obtains the extra event information items associated with an inspection item selected from inspection items included in the checklist generated by the checklist generator, and classifies the extra event information items according to the kind of obtained extra event information item to generate the category information items.

3. The work supporting terminal device according to claim 1,
wherein the category information generator obtains positional information of the work supporting terminal device, and classifies the extra event information items, which include the positional information and are associated with a position within a predetermined range, according to the kind of extra event information item to generate the category information items.

4. The work supporting terminal device according to any one of claims 1 to 3, further comprising:
a summary information generator that generates summary information items of the extra event information items,
wherein the summary information generator generates the summary information items of the extra event information items included in the category information item selected from the category information items displayed by the category information generator.

5. The work supporting terminal device according to any one of claims 1 to 4, further comprising:
a map information generator that obtains positional information of the work supporting terminal device to generate map information item near a position indicated by the positional information.

6. The work supporting terminal device according to claim 5,
wherein the category information generator classifies the extra event information items, which are associated with a position within a range designated on the map information item generated by the map information generator, according to the kind of extra event information item to generate the category information items.

7. The work supporting terminal device according to any one of claims 2, 3 and 6,
wherein the category information generator gives a high priority to the generated category information items in descending order of the number of extra event information items included in the category information items, and
the display arranges the category information items in descending order of priority, and displays the arranged category information items.

8. The work supporting terminal device according to claim 5 or 6, further comprising:
a summary information generator that generates summary information items of the extra event information items,
wherein the summary information generator generates the summary information items of the extra event information items associated with a position selected on the map information item generated by the map information generator.

9. The work supporting terminal device according to claim 4 or 8,
wherein the display arranges or switches between the category information items generated by the category information generator and the summary information items generated by the summary information generator, and displays the arranged or switched information items.

10. The work supporting terminal device according to claim 8,
wherein the display arranges or switches between the category information items generated by the category information generator, the summary information items generated by the summary information generator, and the map information item generated by the map information generator, and displays the arranged or switched information items.

11. A work supporting system comprising:
a server terminal device that obtains extra event information items from a storage which stores the extra event information items recorded for extra events which are not included in events to be inspected in an inspection work performed on a facility of a plant; and
the work supporting terminal device according to any one of claims 1 to 10.

12. A work supporting method of a work supporting terminal device that supports an inspection work performed on a facility of a plant, the method comprising:
classifying extra event information items recorded for extra events, which are not included in events to be inspected in the inspection work, among events occurring in the plant according to the kind of extra event to generate category information items; and
displaying the category information items.

13. A program causing a computer of a work supporting terminal device that supports an inspection work performed on a facility of a plant to perform:
generating category information items obtained by classifying extra event information items recorded for extra events, which are not included in events to be inspected in the inspection work, among events occurring in the plant according to the kind of extra event; and
displaying the category information items.

14. A non-transitory computer readable recording medium that records a computer program, which when executed by a processor of a computer of a work supporting terminal device which supports an inspection work performed on a facility of a plant, causes the computer to perform:
generating category information items obtained by classifying extra event information items recorded for extra events, which are not included in events to be inspected in the inspection work, among events occurring in the plant according to the kind of extra event; and
displaying the category information items.
